# EUROPEAN PATENT APPLICATION

(11) **EP 4 564 906 A1**
(43) Date of publication of application: **04.06.2025**
(21) Application number: 22952349.3
(22) Date of filing: 27.07.2022
(51) Int. Cl.: H04W 36/00

(54) **DETECTION PROCESSING METHOD AND APPARATUS, TERMINAL BEHAVIOR DETERMINING METHOD AND APPARATUS, AND STORAGE MEDIUM**

(71) Applicant: Beijing Xiaomi Mobile Software Co., Ltd., Beijing 100085 (CN)
(72) Inventor: WU, Yumin, Beijing 100085 (CN); XIONG, Yi, Beijing 100085 (CN)
(74) Representative: Dehns Germany Partnerschaft mbB
(86) International application number: PCT/CN2022/108358
(87) International publication number: WO 2024/020887

(57) **Abstract**

The present disclosure provides a detection processing method and apparatus, a terminal behavior determining method and apparatus, and a storage medium. The detection processing method comprises: in response to determining that a candidate cell configuration used by a terminal is changed, determining, according to a predefined rule, whether to perform connection failure detection in a target candidate cell. The present disclosure can improve the stability of wireless connection and achieves high availability.

## Description

### TECHNICAL FIELD

The present disclosure relates to the field of communications, and in particular to a method and apparatus for detection processing, for terminal behavior determination, and a storage medium.

### BACKGROUND

If the network device configures one or more candidate cell configurations (or candidate cell group configurations) for the terminal, the terminal may change the candidate cell configuration (or candidate cell group configuration) corresponding to the serving cell (or serving cell group) according to the activation signaling or deactivation signaling for Layer 1 (L1) or Layer 2 (L2) sent by the network device, or the terminal may change the candidate cell configuration (or candidate cell group configuration) according to a pre-configured trigger event. However, whether the terminal needs to perform connection failure detection for the candidate cell (or candidate cell group) corresponding to the candidate cell configuration (or candidate cell group configuration) that has been stopped from use is a problem that needs to be solved.

### SUMMARY

In order to overcome the problems existing in the related art, the embodiments of the present disclosure provide a method and apparatus for detection processing, for terminal behavior determination, and a storage medium.

According to a first aspect of the embodiments of the present disclosure, a detection processing method is provided, which is performed by a terminal, and includes:
in response to the candidate cell configuration used by the terminal being changed, determining whether to perform connection failure detection in the target candidate cell according to a predefined rule.

In an example, the target candidate cell is associated with a target candidate cell configuration, and the target candidate cell configuration is the candidate cell configuration that is activated or deactivated when the candidate cell configuration changes.

In an example, the determining whether to perform connection failure detection in the target candidate cell according to the predefined rule includes at least one of the following:
determining whether to perform connection failure detection in the target candidate cell according to network configuration indication information sent by a network device, where the network configuration indication information is configured to indicate whether the terminal needs to perform connection failure detection in the target candidate cell;
determining whether to perform connection failure detection in the target candidate cell based on whether the cell type of the target candidate cell belongs to a specified type, where the specified type is a type of cell or cell group that needs to perform connection failure detection as agreed by a protocol;
determining whether to perform connection failure detection in the target candidate cell based on the network configuration indication information and whether the cell type of the target candidate cell belongs to the specified type.

In an example, the determining whether to perform connection failure detection in the target candidate cell based on the network configuration indication information and whether the cell type of the target candidate cell belongs to the specified type includes:
in a case that the cell type of the target candidate cell belongs to the specified type and the network configuration indication information indicates that the terminal needs to perform connection failure detection in the target candidate cell, determining to perform connection failure detection in the target candidate cell;
in a case that the cell type of the target candidate cell does not belong to the specified type, and/or the network configuration indication information indicates that the terminal does not need to perform connection failure detection in the target candidate cell, determining not to perform connection failure detection in the target candidate cell.

In an example, the network configuration indication information is included in the candidate cell configuration information, where the candidate cell configuration information is configured by the network device to provide one or more candidate cell configurations for the terminal.

Alternatively, the network configuration indication information is included in the change indication information, where the change indication information is configured to instruct the terminal to change the used candidate cell configuration.

In an example, the specified type includes at least one of the following:
Primary Cell (PCell);
Primary Secondary Cell (PSCell);
Special Cell (SpCell);
Master Cell Group (MCG).

In an example, the network configuration indication information includes failure configuration information, where the failure configuration information is information configured by the network device for the terminal to perform connection failure detection and/or connection failure recovery.

In an example, the failure configuration information includes at least one of the following:
reference signal indication information, where the reference signal indication information is configured to indicate the specified reference signal for the terminal to perform connection failure detection;
beam identifier, where the beam identifier is configured to indicate the available beam for the terminal to perform connection failure recovery.

In an example, the beam identifier includes at least one of the following:
Synchronization Signal Block (SSB) identifier;
Channel State Information-Reference Signal (CSI-RS) identifier.

In an example, the method further includes at least one of the following:
in response to receiving change indication information sent by the network device, triggering the terminal to change the used candidate cell configuration, where the change indication information is configured to instruct the terminal to change the used candidate cell configuration;
in response to meeting a predefined candidate cell configuration change condition, triggering the terminal to change the used candidate cell configuration.

In an example, the method further includes:
in response that it is determined to perform connection failure detection in the target candidate cell according to the predefined rule, and the target candidate cell configuration is deactivated, performing connection failure detection in the target candidate cell; or
in response that it is determined to perform connection failure detection in the target candidate cell according to the predefined rule, and the target candidate cell configuration is activated, performing connection failure detection in the target candidate cell.

In an example, the performing connection failure detection in the target candidate cell includes at least one of the following:
resetting the counter corresponding to the connection failure detection process;
resetting the timer corresponding to the connection failure detection process;
discarding the connection failure report information;
considering that the connection failure recovery process is successfully completed;
in response that the connection failure recovery configuration is changed, stopping the ongoing connection failure recovery process and triggering a new connection failure recovery process.

In an example, the method further includes;
triggering the terminal to perform connection failure recovery.

In an example, the triggering the terminal to perform connection failure recovery includes:
after the target candidate cell performs connection failure detection and detects connection failure, and in response to the target candidate cell configuration being activated again, triggering the terminal to perform connection failure recovery; or
in response to the target candidate cell performing connection failure detection and detecting connection failure, triggering the terminal to perform connection failure recovery in a cell where the candidate cell configuration is activated.

In an example, the triggering the terminal to perform connection failure recovery includes at least one of the following:
triggering the terminal to perform random access in the target candidate cell;
triggering the terminal to report connection failure information associated with the target candidate cell.

In an example, the connection failure information includes at least one of the following:
candidate cell configuration identifier corresponding to connection failure;
candidate cell identifier corresponding to connection failure;
connection failure type;
cell state corresponding to connection failure;
cell configuration state corresponding to connection failure;
reference signal information corresponding to connection failure;
cell information used for connection failure recovery;
reference signal information used for connection failure recovery.

According to a second aspect of the embodiments of the present disclosure, a terminal behavior determination method is provided, which is performed by a network device, and includes:
determining whether the terminal performs connection failure detection in the target candidate cell according to a predefined rule.

In an example, the target candidate cell is associated with a target candidate cell configuration, and the target candidate cell configuration is the candidate cell configuration that is activated or deactivated when the candidate cell configuration used by the terminal changes.

In an example, the determining whether the terminal performs connection failure detection in the target candidate cell according to the predefined rule includes:
determining whether the terminal performs connection failure detection in the target candidate cell based on network configuration indication information sent by the network device to the terminal, where the network configuration indication information is configured to indicate whether the terminal needs to perform connection failure detection in the target candidate cell;
determining whether the terminal performs connection failure detection in the target candidate cell based on whether the cell type of the target candidate cell belongs to a specified type, where the specified type is a type of cell or cell group that needs to perform connection failure detection as agreed by a protocol;
determining whether the terminal performs connection failure detection in the target candidate cell based on the network configuration indication information and whether the cell type of the target candidate cell belongs to the specified type.

In an example, the determining whether the terminal performs connection failure detection in the target candidate cell based on the network configuration indication information and whether the cell type of the target candidate cell belongs to the specified type includes:
in a case that the cell type of the target candidate cell belongs to the specified type and the network configuration indication information indicates that the terminal needs to perform connection failure detection in the target candidate cell, determining that the terminal performs connection failure detection in the target candidate cell;
in a case that the cell type of the target candidate cell does not belong to the specified type and/or the network configuration indication information indicates that the terminal does not need to perform connection failure detection in the target candidate cell, determining that the terminal does not perform connection failure detection in the target candidate cell.

In an example, the method further includes:
sending candidate cell configuration information including the network configuration indication information to the terminal, where the candidate cell configuration information is configured by the network device to provide one or more candidate cell configurations for the terminal; or
sending change indication information including the network configuration indication information to the terminal, where the change indication information is configured to instruct the terminal to change the used candidate cell configuration.

In an example, the specified type includes at least one of the following:
Primary Cell (PCell);
Primary Secondary Cell (PSCell);
Special Cell (SpCell);
Master Cell Group (MCG).

In an example, the network configuration indication information includes failure configuration information, and the failure configuration information is information used to configure the terminal to perform connection failure detection and/or connection failure recovery.

In an example, the failure configuration information includes at least one of the following:
reference signal indication information, where the reference signal indication information is configured to indicate the specified reference signal for the terminal to perform connection failure detection;
beam identifier, where the beam identifier is configured to indicate the available beam when the terminal performs connection failure recovery.

In an example, the beam identifier includes at least one of the following: Synchronization Signal Block (SSB) identifier;
Channel State Information-Reference Signal (CSI-RS) identifier.

According to a third aspect of the embodiments of the present disclosure, a detection processing apparatus is provided, which is applied to a terminal, and includes:
a first determination module, configured to determine whether to perform connection failure detection in a target candidate cell according to a predefined rule in response to a candidate cell configuration used by the terminal being changed.

According to a fourth aspect of the embodiments of the present disclosure, a terminal behavior determination apparatus is provided, which is applied to a network device, and includes:
a second determination module, configured to determine whether the terminal performs connection failure detection in the target candidate cell.

According to a fifth aspect of the embodiments of the present disclosure, a computer-readable storage medium is provided. The storage medium stores a computer program. The computer program is used to execute any of the described detection processing methods at the terminal side.

According to a sixth aspect of the embodiments of the present disclosure, a computer-readable storage medium is provided. The storage medium stores a computer program. The computer program is used to execute any of the described terminal behavior determination methods at the network device side.

According to a seventh aspect of the embodiments of the present disclosure, a detection processing device is provided, including:
a processor;
a memory for storing instructions executable by the processor.

The processor is configured to perform any of the described detection processing methods at the terminal side.

According to a eighth aspect of the embodiments of the present disclosure, a terminal behavior determination device is provided, including:
a processor;
a memory for storing instructions executable by the processor.

The processor is configured to perform any of the described terminal behavior determination methods at the network device side.

It is to be understood that the foregoing general description and the following detailed description are exemplary and explanatory only, and are not restrictive of the present disclosure.

### BRIEF DESCRIPTION OF THE DRAWINGS

The drawings herein are incorporated into the specification and constitute a part of the specification, showing embodiments consistent with the present disclosure, and are used together with the specification to explain the principles of the present disclosure.
Fig. 1 is a flow chart of a detection processing method according to an example embodiment.
Fig. 2 is a flow chart of another detection processing method according to an example embodiment.
Fig. 3 is a flow chart of another detection processing method according to an example embodiment.
Fig. 4 is a flow chart of another detection processing method according to an example embodiment.
Fig. 5A is a flow chart of another detection processing method according to an example embodiment.
Fig. 5B is a flow chart of another detection processing method according to an example embodiment.
Fig. 6 is a flow chart of a terminal behavior determination method according to an example embodiment.
Fig. 7 is a flow chart of another terminal behavior determination method according to an example embodiment.
Fig. 8 is a flow chart of another terminal behavior determination method according to an example embodiment.
Fig. 9 is a flow chart of another terminal behavior determination method according to an example embodiment.
Fig. 10 is a block diagram of a detection processing apparatus according to an example embodiment.
Fig. 11 is a block diagram of a terminal behavior determination apparatus according to an example embodiment.
Fig. 12 is a schematic structural diagram of a detection processing device according to an example embodiment of the present disclosure.
Fig. 13 is a schematic structural diagram of a terminal behavior determination device according to an example embodiment of the present disclosure.

### DETAILED DESCRIPTION OF THE EMBODIMENTS

Example embodiments will be described in detail herein, instances of which are shown in the accompanying drawings. When the following description refers to the drawings, unless otherwise indicated, the same numbers in different drawings represent the same or similar elements. The embodiments described in the following example embodiments do not represent all the embodiments consistent with the present disclosure. Instead, they are merely examples of devices and methods consistent with some aspects of the present disclosure as detailed in the appended claims.

The terms used in the present disclosure are for the purpose of describing specific embodiments only and are not intended to limit the present disclosure. The singular forms "one", "said", and "the" used in the present disclosure and the appended claims are also intended to include the plural forms, unless the context clearly indicates otherwise. It should also be understood that the term "and/or" used herein refers to and includes any or all possible combinations of at least one associated item as listed.

It should be understood that although the terms first, second, third, etc. may be used in the present disclosure to describe various information, these information should not be limited to these terms. These terms are only used to distinguish the same type of information from each other. For example, without departing from the scope of the present disclosure, the first information may also be referred to as the second information, and similarly, the second information may also be referred to as the first information. Depending on the context, the word "if" as used herein may be interpreted as "while" or "when" or "in response to".

Before introducing the solution provided by the present disclosure, the dynamic cell (or dynamic cell group) change is introduced.

In the 5th generation mobile communication technology (5G) system, the network device can provide multiple candidate cells (or candidate cell groups) to the terminal. The network device can subsequently control the terminal to switch among multiple candidate cells (or candidate cell groups) through L1 or L2 signaling, for example, changing the working cell (or working cell group) from candidate cell #1 (or candidate cell group #1) to candidate cell #2 (or candidate cell group #2).

L1 signaling includes, but is not limited to, Downlink Control Information (DCI), and L2 signaling includes, but is not limited to, Media Access Control Element (MAC CE).

One service cell (or service cell group) may correspond to one or more candidate cells (or candidate cell groups).

In the 5G system, due to the use of Dual Connectivity (DC) architecture, two cell (or cell group) groups are included:
Master Cell Group (MCG), corresponding to the Master Node (MN) at the network side;
Secondary Cell Group (SCG), corresponding to the Secondary Node (SN) at the network side.

MCG includes 1 Primary Cell (PCell) and 1 or more Secondary Cells (SCell). SCG includes 1 Primary Secondary Cell (PSCell) and 1 or more SCells. PCell and PSCell may be collectively referred to as Special Cell (SpCell).

In the current system, each cell (or cell group) is assigned a serving cell configuration (or serving cell group configuration), namely ServingCellConfig. The service cell configuration (or service cell group configuration) will be associated with a service cell identifier (or service cell group identifier), namely ServCellIndex, which is used to uniquely identify a service cell (or service cell group) inside the terminal. The service cell (or service cell group) for PCell is identified as "0". A service cell (or service cell group) will be associated with a Hybrid Automatic Repeat Request (HARQ) entity, which includes multiple HARQ processes.

In addition, in the 5G system, the terminal may change the service cell (or service cell group) based on the pre-configured condition at the network side and the pre-configured cell (or cell group) corresponding to the condition. For example, when the terminal meets the pre-configured condition, such as a specific measurement event, the terminal changes the service cell (or service cell group) to the pre-configured cell (or cell group). The mobility process based on conditional triggering includes at least one of the following:
Conditional Handover (CHO);
Conditional PSCell Addition (CPA);
Conditional PSCell Change (CPC).

The terminal may also change the specific cell configuration (or cell group configuration) according to the instruction by the network device after meeting the pre-configured condition. For example, the PCell configuration for the terminal is changed from candidate cell configuration #1 (or candidate cell group configuration #1) to candidate cell configuration #2 (or candidate cell group configuration #2).

The following is an introduction to connection failure.

Connection failure for the terminal includes the following:
switch failure, for example, the switch being not completed within the specified time, and the corresponding timer t304 timing out;
Secondary Cell Group (SCG) change failure, for example, access to the new SCG being not completed within the specified time, and the corresponding timer t307 timing out;
cell change failure, for example, the cell change being not completed within the specified time;
cell activation failure, for example, the cell activation being not completed within the specified time;
Radio Link Failure (RLF);

The Radio Link Failure includes:
physical layer desynchronization, for example, timer t310 timing out;
random access failure at Media Access Control (MAC) layer, for example, reaching the maximum number of random access attempts;
indication of Radio Link Control (RLC) layer reaching the maximum number of retransmissions, for example, reaching the maximum number of RLC layer retransmissions;

beam failure, for example, the beam failure detection mechanism detecting that beam failure has occurred, in which case the beam failure counter reaching the threshold value.

For the physical layer desynchronization detection, such as Radio Link Monitoring (RLM) and Beam Failure Detection (BFD), the terminal needs to monitor the signal corresponding to RLM, for example, Synchronization Signal Block (SSB) and/or Channel State Information-Reference Signal (CSI-RS).

In order to solve the technical problems of the present disclosure, the present disclosure provides the following method and device for detection processing, for terminal behavior determination, and a storage medium, which can improve the stability of wireless connection and have high availability.

It should be noted that in the embodiments of the present disclosure, the candidate cell involved may refer to a candidate cell or a candidate cell group, and the candidate cell configuration may refer to a candidate cell configuration or a candidate cell group configuration, which is not limited by the present disclosure.

The following first introduces the detection processing method provided by the present disclosure from the terminal side.

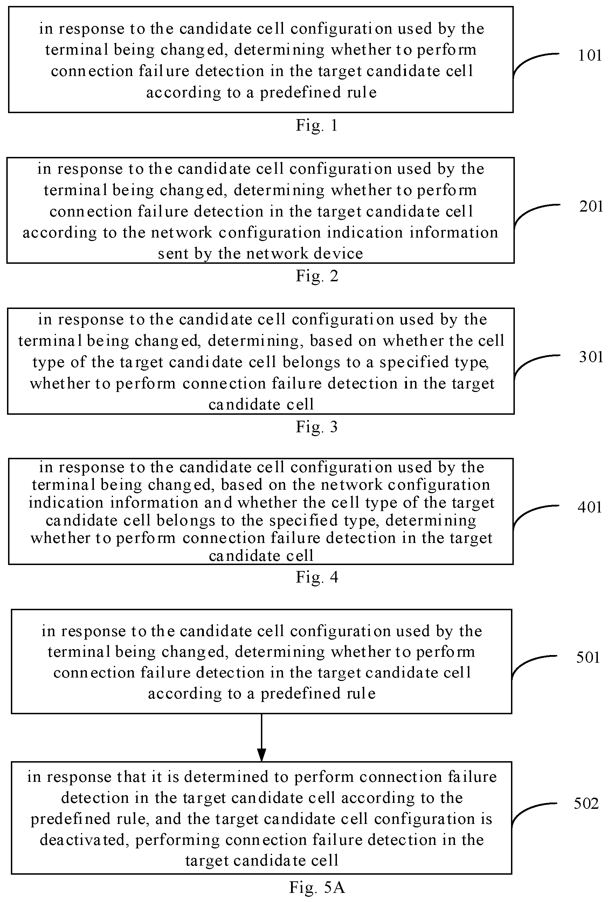

The embodiments of the present disclosure provide a detection processing method. As shown in Fig. 1, which is a flow chart of a detection processing method according to an embodiment, which may be performed by a terminal, and the method may include the following step 101.

In step 101, in response to the candidate cell configuration used by the terminal being changed, it is determined whether to perform connection failure detection in the target candidate cell according to a predefined rule.

In an implementation, the target candidate cell may be associated with the target candidate cell configuration. If the target candidate cell configuration includes a configuration for a candidate cell, then the candidate cell is the target candidate cell, and the target candidate cell is associated with the target candidate cell configuration.

In an embodiment of the present disclosure, the target candidate cell configuration may be the candidate cell configuration that is activated or deactivated when the candidate cell configuration changes.

In an implementation, in response to receiving change indication information sent by a network device, the terminal is triggered to change the used candidate cell configuration. The change indication information is configured to instruct the terminal to change the used candidate cell configuration, that is, triggering the terminal to perform the behavior of changing the used candidate cell configuration.

For example, the change indication information indicates that the candidate cell configuration corresponding to the PCell of the terminal is changed from candidate cell configuration #1 to candidate cell configuration #2. At this time, the terminal is triggered to change the used candidate cell configuration.

In an example, the change indication information may be Downlink Control Information (DCI), MAC CE, or RRC message.

In another implementation, in response to meeting a predefined candidate cell configuration change condition, the terminal is triggered to change the used candidate cell configuration, that is, triggering the terminal to perform the behavior of changing the used candidate cell configuration.

In an example, the candidate cell configuration change condition may include, but is not limited to, the measurement result on the PCell by the terminal satisfying the A3 event.

In an embodiment of the present disclosure, the behavior of the terminal changing the used candidate cell configuration includes, but is not limited to, at least one of the following: the candidate cell configuration corresponding to the target candidate cell changes; the candidate cell configuration corresponding to the target candidate cell is deactivated.

For example, when the candidate cell configuration corresponding to the target candidate cell changes, the candidate cell configuration corresponding to the PCell of the terminal changes from candidate cell configuration #1 to candidate cell configuration #2. Accordingly, at least one of candidate cell configuration #1 and candidate cell configuration #2 may be used as the target candidate cell configuration.

For another example, when the candidate cell configuration corresponding to the target candidate cell is deactivated, the candidate cell configuration #1 corresponding to the PCell of the terminal is deactivated. Accordingly, candidate cell configuration #1 may be used as the target candidate cell configuration.

The above is only an example description, and the behavior of the candidate cell configuration change performed by the terminal is not limited to the above behavior.

In an implementation, the target candidate cell configuration is the candidate cell configuration that is activated when the candidate cell configuration changes. Then, the terminal determines whether to perform connection failure detection in the target candidate cell.

In another implementation, the target candidate cell configuration is the candidate cell configuration that is deactivated when the candidate cell configuration changes. Then, the terminal determines whether to perform connection failure detection in the target candidate cell.

In the above embodiment(s), when the candidate cell configuration used by the terminal changes, the terminal may determine whether to perform connection failure detection in the target candidate cell according to a predefined rule, and subsequently perform connection failure detection and connection failure recovery in the target candidate cell, thereby improving the stability of the wireless connection and providing high availability.

In some embodiments, as shown in Fig. 2, Fig. 2 is a flow chart of a detection processing method according to an embodiment, which may be performed by the terminal. The method may include the following step 201.

In step 201, in response to the candidate cell configuration used by the terminal being changed, it is determined whether to perform connection failure detection in the target candidate cell according to the network configuration indication information sent by the network device.

In an embodiment of the present disclosure, the target candidate cell is associated with the target candidate cell configuration. If the target candidate cell configuration includes a configuration for a candidate cell, then the candidate cell is the target candidate cell, and the target candidate cell is associated with the target candidate cell configuration.

In an embodiment of the present disclosure, the target candidate cell configuration is the candidate cell configuration that is activated or deactivated when the candidate cell configuration changes.

In an embodiment of the present disclosure, the condition for triggering the terminal to perform the behavior of changing the used candidate cell configuration and the specific behavior of the terminal to perform the change of the used candidate cell configuration are the same as those described in the above step 101, and are not repeated here.

In an embodiment of the present disclosure, the network configuration indication information is configured to indicate whether the terminal needs to perform connection failure detection in the target candidate cell.

In an implementation, the network device may send candidate cell configuration information to the terminal, and the candidate cell configuration information is configured by the network device to provide one or more candidate cell configurations for the terminal. In an example, the network device may send the candidate cell configuration information through an RRC reconfiguration (RRCReconfiguration) message. The terminal may determine whether the candidate cell configuration has changed based on the candidate cell configuration information.

In an embodiment of the present disclosure, the network configuration indication information may be included in the above candidate cell configuration information.

In another implementation, the network device may send change indication information to the terminal, and the change indication information is configured to instruct the terminal to change the used candidate cell configuration. For example, the candidate cell configuration for the PCell of the terminal is changed from candidate cell configuration #1 to candidate cell configuration #2.

In an embodiment of the present disclosure, the network configuration indication information may be included in the above-mentioned change indication information.

By reusing the existing information to send the network configuration indication information, the signaling resources of the network device can be effectively saved, and the implementation is simple and the availability is high.

In an implementation, the network configuration indication information is configured to indicate that the terminal needs to perform connection failure detection in the target candidate cell. Then, the terminal determines to perform connection failure detection in the target candidate cell according to the network configuration indication information.

In another implementation, the network configuration indication information is configured to indicate that the terminal does not need to perform connection failure detection in the target candidate cell. Then, the terminal determines not to perform connection failure detection in the target candidate cell according to the network configuration indication information.

In the above embodiment(s), when the candidate cell configuration used by the terminal changes, the terminal may determine whether to perform connection failure detection in the target candidate cell according to the network configuration indication information sent by the network device, and subsequently perform connection failure detection and connection failure recovery in the target candidate cell, thereby improving the stability of the wireless connection and providing high availability.

In some embodiments, as shown in Fig. 3, Fig. 3 is a flow chart of a detection processing method according to an embodiment, which may be performed by the terminal. The method may include the following step 301.

In step 301, in response to the candidate cell configuration used by the terminal being changed, it is determined, based on whether the cell type of the target candidate cell belongs to a specified type, whether to perform connection failure detection in the target candidate cell.

In an embodiment of the present disclosure, the target candidate cell is associated with the target candidate cell configuration. If the target candidate cell configuration includes the configuration of a candidate cell, then the candidate cell is the target candidate cell, and the target candidate cell is associated with the target candidate cell configuration.

In an embodiment of the present disclosure, the target candidate cell configuration is the candidate cell configuration that is activated or deactivated when the candidate cell configuration changes.

In an embodiment of the present disclosure, the condition for triggering the terminal to perform the behavior of changing the used candidate cell configuration and the specific behavior of the terminal to perform the change of the used candidate cell configuration are the same as those described in the above step 101, and are not repeated here.

In an embodiment of the present disclosure, the specified type is the type of cell or cell group that needs to perform connection failure detection as agreed by a protocol. That is, when the terminal determines that the used candidate cell configuration has changed, it may determine whether to perform connection failure detection in the target candidate cell based on the protocol agreement.

In an implementation, the specified type includes, but is not limited to, at least one of the following: Primary Cell (PCell); Primary Secondary Cell (PSCell); Special Cell (SpCell); Master Cell Group (MCG).

In an implementation, if the cell type of the target candidate cell belongs to any of the specified types, the terminal determines to perform connection failure detection in the target candidate cell.

In another implementation, if the cell type of the target candidate cell does not belong to any of the specified types, the terminal determines not to perform connection failure detection in the target candidate cell.

In the above embodiment(s), when the candidate cell configuration used by the terminal changes, the terminal may determine whether to perform connection failure detection in the target candidate cell based on the protocol agreement, and then perform connection failure detection and connection failure recovery in the target candidate cell, thereby improving the stability of the wireless connection and providing high availability.

In some embodiments, as shown in Fig. 4, Fig. 4 is a flow chart of a detection processing method according to an embodiment, which may be performed by the terminal. The method may include the following step 401.

In step 401, in response to the candidate cell configuration used by the terminal being changed, based on the network configuration indication information and whether the cell type of the target candidate cell belongs to the specified type, it is determined whether to perform connection failure detection in the target candidate cell.

In an embodiment of the present disclosure, the target candidate cell is associated with the target candidate cell configuration. If the target candidate cell configuration includes a configuration for a candidate cell, then the candidate cell is the target candidate cell, and the target candidate cell is associated with the target candidate cell configuration.

In an embodiment of the present disclosure, the target candidate cell configuration is the candidate cell configuration that is activated or deactivated when the candidate cell configuration changes.

In an embodiment of the present disclosure, the condition for triggering the terminal to perform the behavior of changing the used candidate cell configuration and the specific behavior of the terminal to perform the change of the used candidate cell configuration are the same as those described in the above step 101, and will not be repeated here.

In an embodiment of the present disclosure, the network configuration indication information is configured to indicate whether the terminal needs to perform connection failure detection in the target candidate cell. The specified type is the type of cell or cell group that needs to perform connection failure detection as agreed by the protocol.

That is, when the terminal determines that the used candidate cell configuration has changed, it may jointly determine whether to perform connection failure detection in the target candidate cell based on the network configuration indication information sent by the network device and the protocol agreement.

In an implementation, the specified type includes, but is not limited to, at least one of the following: Primary Cell (PCell); Primary Secondary Cell (PSCell); Special Cell (SpCell); Master Cell Group (MCG).

In an implementation, when the cell type of the target candidate cell belongs to any one of the specified types, and the network configuration indication information indicates that the terminal needs to perform connection failure detection in the target candidate cell, the terminal determines to perform connection failure detection in the target candidate cell.

In another implementation, the cell type of the target candidate cell does not belong to any of the specified types. Then, even if the network configuration indication information indicates that the terminal needs to perform connection failure detection in the target candidate cell, the terminal determines not to perform connection failure detection in the target candidate cell.

In another implementation, even if the cell type of the target candidate cell belongs to any of the specified types, but the network configuration indication information indicates that the terminal does not need to perform connection failure detection in the target candidate cell, the terminal then determines not to perform connection failure detection in the target candidate cell.

In another implementation, when the cell type of the target candidate cell does not belong to any of the specified types, and the network configuration indication information indicates that the terminal does not need to perform connection failure detection in the target candidate cell, the terminal determines not to perform connection failure detection in the target candidate cell.

In the above embodiment(s), when the candidate cell configuration used by the terminal changes, the terminal may jointly determine whether to perform connection failure detection in the target candidate cell according to the network configuration indication information sent by the network device and the protocol agreement, and subsequently perform connection failure detection and connection failure recovery in the target candidate cell, thereby improving the stability of the wireless connection and providing high availability.

In some embodiments, the network configuration indication information sent by the network device to the terminal may also include failure configuration information. The failure configuration information is information configured by the network device for the terminal to perform connection failure detection and/or connection failure recovery.

For example, the failure configuration information is included in the MAC CE of the change indication information including the network configuration indication information.

In an implementation, the failure configuration information includes, but is not limited to, at least one of the following: reference signal indication information, where the reference signal indication information is configured to indicate the specified reference signal for the terminal to perform connection failure detection; beam identifier, where the beam identifier is configured to indicate the available beam when the terminal performs connection failure recovery.

Specifically, the beam identifier includes at least one of the following: SSB identifier; CSI-RS identifier.

In the above embodiment(s), the network configuration indication information sent by the network device to the terminal may include the failure configuration information, thereby configuring the terminal with information for performing connection failure detection and/or connection failure recovery. Thus, the terminal may subsequently perform connection failure detection and connection failure recovery in the target candidate cell, thereby improving the stability of the wireless connection and providing high availability.

In some embodiments, as shown in Fig. 5A, Fig. 5A is a flow chart of a detection processing method according to an embodiment, which may be performed by a terminal. The method may include the following steps 501 and 502.

In step 501, in response to the candidate cell configuration used by the terminal being changed, it is determined whether to perform connection failure detection in the target candidate cell according to a predefined rule.

The specific implementation may refer to the above steps 201, 301, or 401, which will not be repeated here.

In step 502, in response that it is determined to perform connection failure detection in the target candidate cell according to the predefined rule, and the target candidate cell configuration is deactivated, connection failure detection is performed in the target candidate cell.

In an embodiment of the present disclosure, if the terminal performs connection failure detection in the target candidate cell according to the above predefined rule (by reference to steps 201, 301, or 401), and the target candidate cell configuration is deactivated, then the terminal may perform connection failure detection in the target candidate cell.

In an embodiment of the present disclosure, the behavior of the terminal performing connection failure detection in the target candidate cell includes, but is not limited to, at least one of the following: resetting the counter corresponding to the connection failure detection process; resetting the timer corresponding to the connection failure detection process; discarding the connection failure report information; considering that the connection failure recovery process is successfully completed; in response that the connection failure recovery configuration is changed, stopping the ongoing connection failure recovery process and triggering a new connection failure recovery process.

The counter corresponding to the connection failure detection process includes, but is not limited to, the beam failure counter and the physical layer desynchronization counter.

The timer corresponding to the connection failure detection process includes, but is not limited to, the beam failure detection timer and the physical layer desynchronization timer.

Discarding the connection failure report information includes, but is not limited to, discarding the beam failure report MAC CE, or discarding the Radio Link Failure report.

Considering that the connection failure recovery process is successfully completed includes, but is not limited to, at least one of the following: for the beam failure recovery process, the terminal considers that the beam failure recovery process is successfully completed; for the beam failure recovery process in the SCell, it is considered that the beam failure report process is successfully completed; for the beam failure recovery process in the SCell, it is considered that the random access process triggered by the beam failure is successfully completed.

In response that the connection failure recovery configuration changes, the terminal may stop the ongoing connection failure recovery process and trigger a new connection failure recovery process.

For example, for the beam failure recovery process in the SpCell, if the beam failure recovery configuration of the SpCell changes during the activation, deactivation or change process of the candidate cell configuration corresponding to the SpCell, the terminal stops the ongoing beam failure recovery process (for example, the random access process triggered by beam failure recovery in the SpCell) and triggers a new beam failure recovery process (for example, the random access process that triggers beam failure recovery in the SpCell).

In the above embodiment(s), when the candidate cell configuration used by the terminal changes, the terminal may determine whether to perform connection failure detection in the target candidate cell according to the predefined rule, and then perform connection failure detection in the target candidate cell, thereby improving the stability of the wireless connection and providing high availability.

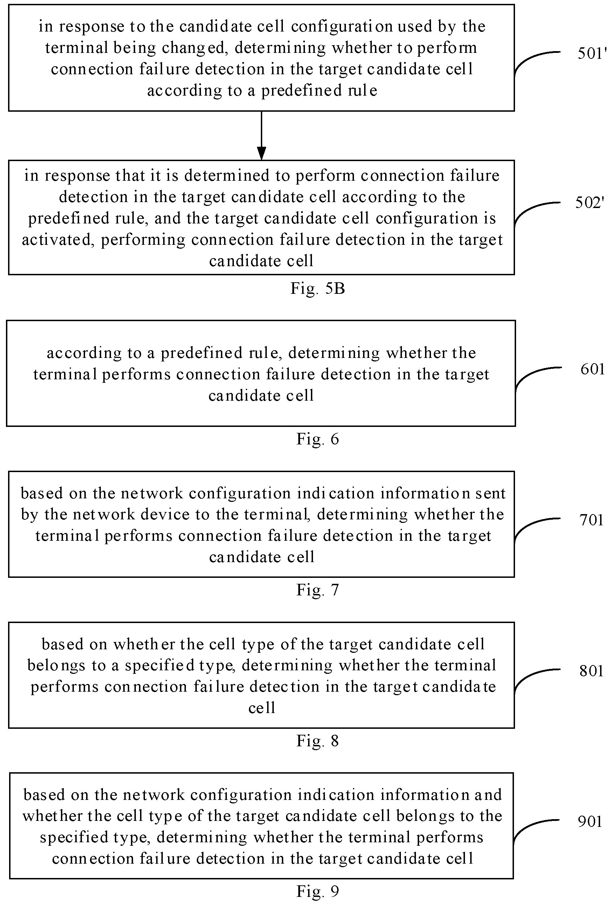

In some embodiments, as shown in Fig. 5B, Fig. 5B is a flow chart of a detection processing method according to an embodiment, which may be performed by a terminal. The method may include the following steps 501' and 502'.

In step 501', in response to the candidate cell configuration used by the terminal being changed, it is determined whether to perform connection failure detection in the target candidate cell according to a predefined rule.

The specific implementation may refer to the above steps 201, 301 or 401, which will not be repeated here.

In step 502', in response that it is determined to perform connection failure detection in the target candidate cell according to the predefined rule, and the target candidate cell configuration is activated, connection failure detection is performed in the target candidate cell.

In an embodiment of the present disclosure, the terminal determines to perform connection failure detection in the target candidate cell according to the predefined rule (by reference to step 201, 301 or 401), and the target candidate cell configuration is activated. Then, the terminal may perform connection failure detection in the target candidate cell.

In an embodiment of the present disclosure, the target candidate cell configuration may be a candidate cell configuration that has been activated before and is activated again this time. Alternatively, the target candidate cell configuration may be a candidate cell configuration that has never been activated before and is activated this time. The present disclosure is not limited in this regard.

In an embodiment of the present disclosure, the behavior of the terminal performing connection failure detection in the target candidate cell includes, but is not limited to, at least one of the following: resetting the counter corresponding to the connection failure detection process; resetting the timer corresponding to the connection failure detection process; discarding the connection failure report information; considering that the connection failure recovery process is successfully completed; in response that the connection failure recovery configuration is changed, stopping the ongoing connection failure recovery process and triggering a new connection failure recovery process.

The counter corresponding to the connection failure detection process includes, but is not limited to, the beam failure counter and the physical layer desynchronization counter.

The timer corresponding to the connection failure detection process includes, but is not limited to, the beam failure detection timer and the physical layer desynchronization timer.

Discarding the connection failure report information includes, but is not limited to, discarding the beam failure report MAC CE, or discarding the Radio Link Failure report.

Considering that the connection failure recovery process is successfully completed includes, but is not limited to, at least one of the following: for the beam failure recovery process, the terminal considers that the beam failure recovery process is successfully completed; for the beam failure recovery process in the SCell, it is considered that the beam failure report process is successfully completed; for the beam failure recovery process in the SCell, it is considered that the random access process triggered by beam failure is successfully completed.

In response that the connection failure recovery configuration changes, the terminal may stop the ongoing connection failure recovery process and trigger a new connection failure recovery process.

For example, for the beam failure recovery process in the SpCell, if the beam failure recovery configuration of the SpCell changes during the activation, deactivation or change of the candidate cell configuration corresponding to the SpCell, the terminal stops the ongoing beam failure recovery process (for example, the random access process triggered by beam failure recovery in the SpCell) and triggers a new beam failure recovery process (for example, the random access process that triggers beam failure recovery in the SpCell).

In the above embodiment(s), when the candidate cell configuration used by the terminal changes, the terminal may determine whether to perform connection failure detection in the target candidate cell according to a predefined rule, and then perform connection failure detection in the target candidate cell, thereby improving the stability of the wireless connection and providing high availability.

In some embodiments, after the terminal performs connection failure detection in the target candidate cell, the terminal may be triggered to perform connection failure recovery.

In an implementation, after the terminal performs connection failure detection in the target candidate cell and detects connection failure, and in response to the target candidate cell configuration being activated again, the terminal is triggered to perform connection failure recovery.

In another implementation, in response to the target candidate cell performing connection failure detection and detecting connection failure, the terminal is triggered to perform connection failure recovery in the cell where the candidate cell configuration is activated.

For example, the beam failure occurring in the deactivated SCell is reported by the activated PCell.

In an embodiment of the present disclosure, triggering the terminal to perform connection failure recovery may include, but is not limited to, at least one of the following: triggering the terminal to perform random access in the target candidate cell; triggering the terminal to report connection failure information associated with the target candidate cell.

The connection failure information reported by the terminal includes, but is not limited to, at least one of the following: candidate cell configuration identifier corresponding to connection failure; candidate cell identifier corresponding to connection failure; connection failure type; cell state corresponding to connection failure; cell configuration state corresponding to connection failure; reference signal information corresponding to connection failure; cell information used for connection failure recovery; reference signal information used for connection failure recovery.

The candidate cell configuration identifier corresponding to connection failure refers to the identifier of the candidate cell configuration in which connection failure is detected, and the candidate cell identifier corresponding to connection failure refers to the identifier of the candidate cell in which connection failure is detected.

The connection failure type includes, but is not limited to, at least one of the following: beam failure; physical layer desynchronization.

The cell state corresponding to connection failure includes, but is not limited to, activation state and deactivation state.

The cell configuration state corresponding to connection failure includes, but is not limited to, activation state and deactivation state.

In an embodiment of the present disclosure, the network device will configure the cell state for different candidate cells, including activation state or deactivation state. The configured cell state is a candidate cell in activation state, and the actual cell state may be activation state or deactivation state. The cell configuration state corresponding to connection failure refers to the cell state configured by the network device for the cell in which connection failure occurs. The cell state corresponding to connection failure refers to the actual state of the cell in which connection failure occurs.

The reference signal information corresponding to connection failure includes, but is not limited to, the beam information corresponding to beam failure.

The cell information used for connection failure recovery refers to the relevant information of the cell that can be used for connection failure recovery provided by the network device to the terminal.

The reference signal information used for connection failure recovery includes, but is not limited to, the relevant information of the available candidate beam detected by the terminal after beam failure occurs.

In the above embodiment(s), when the candidate cell configuration used by the terminal changes, the terminal may determine whether to perform connection failure detection in the target candidate cell according to the predefined rule, and then perform connection failure detection in the target candidate cell. When connection failure is detected, the terminal may be triggered to perform connection failure recovery, thereby improving the stability of the wireless connection and providing high availability.

The terminal behavior determination method provided by the present disclosure is introduced from the network device side.

The embodiments of the present disclosure provide a terminal behavior determination method. As shown in Fig. 6, Fig. 6 is a flow chart of a terminal behavior determination method according to an embodiment, which may be performed by a network device. The network device includes, but is not limited to, a 4G base station, a 5G base station, an MN, a SN, etc. The method may include the following step 601.

In step 601, according to a predefined rule, it is determined whether the terminal performs connection failure detection in the target candidate cell.

In an implementation, the target candidate cell is associated with the target candidate cell configuration. If the target candidate cell configuration includes the configuration for a candidate cell, then the candidate cell is the target candidate cell, and the target candidate cell is associated with the target candidate cell configuration.

In an embodiment of the present disclosure, the target candidate cell configuration is the candidate cell configuration that is activated or deactivated when the candidate cell configuration changes.

In the above embodiment(s), the network device may determine whether the terminal performs connection failure detection in the target candidate cell based on the predefined rule. It is ensured that the network device and the terminal have consistent understanding and high availability is provided.

In some embodiments, as shown in Fig. 7, Fig. 7 is a flow chart of a terminal behavior determination method according to an embodiment, which may be performed by a network device. The network device includes, but is not limited to, a 4G base station, a 5G base station, an MN, a SN, etc. The method may include the following step 701.

In step 701, based on the network configuration indication information sent by the network device to the terminal, it is determined whether the terminal performs connection failure detection in the target candidate cell.

In an embodiment of the present disclosure, the target candidate cell is associated with the target candidate cell configuration. If the target candidate cell configuration includes a configuration for a candidate cell, then the candidate cell is the target candidate cell, and the target candidate cell is associated with the target candidate cell configuration.

In an embodiment of the present disclosure, the target candidate cell configuration is the candidate cell configuration that is activated or deactivated when the candidate cell configuration changes.

In an embodiment of the present disclosure, the network configuration indication information is configured to indicate whether the terminal needs to perform connection failure detection in the target candidate cell.

In an implementation, the network device may send candidate cell configuration information to the terminal, and the candidate cell configuration information is configured by the network device to provide one or more candidate cell configurations for the terminal. In an example, the network device may send the candidate cell configuration information through an RRCReconfiguration message. The terminal may determine whether the candidate cell configuration changes based on the candidate cell configuration information.

In an embodiment of the present disclosure, the network configuration indication information may be included in the above-mentioned candidate cell configuration information.

In another implementation, the network device may send change indication information to the terminal, and the change indication information is configured to instruct the terminal to change the used candidate cell configuration. For example, the candidate cell configuration for the PCell of the terminal is changed from candidate cell configuration #1 to candidate cell configuration #2.

In an embodiment of the present disclosure, the network configuration indication information may be included in the above-mentioned change indication information.

By reusing the existing information to send the network configuration indication information, the signaling resources of the network device can be effectively saved, and the implementation is simple and the availability is high.

In an implementation, the network configuration indication information is configured to indicate that the terminal needs to perform connection failure detection in the target candidate cell. Then, the network device may determine that the terminal performs connection failure detection in the target candidate cell based on the network configuration indication information.

In another implementation, the network configuration indication information is configured to indicate that the terminal does not need to perform connection failure detection in the target candidate cell. Then, the network device may determine that the terminal does not perform connection failure detection in the target candidate cell based on the network configuration indication information.

In the above embodiment(s), the network device may send the network configuration indication information to the terminal, thereby indicating whether the terminal performs connection failure detection in the target candidate cell. It is ensured that the network device and the terminal have consistent understanding and high availability is provided.

In some embodiments, as shown in Fig. 8, Fig. 8 is a flow chart of a terminal behavior determination method according to an embodiment, which may be performed by a network device. The network device includes, but is not limited to, a 4G base station, a 5G base station, an MN, a SN, etc. The method may include the following step 801.

In step 801, based on whether the cell type of the target candidate cell belongs to a specified type, it is determined whether the terminal performs connection failure detection in the target candidate cell.

The target candidate cell is associated with the target candidate cell configuration. If the target candidate cell configuration includes a configuration for a candidate cell, then the candidate cell is the target candidate cell, and the target candidate cell is associated with the target candidate cell configuration.

In an embodiment of the present disclosure, the target candidate cell configuration is the candidate cell configuration that is activated or deactivated when the candidate cell configuration changes.

In an embodiment of the present disclosure, the specified type is the type of cell or cell group that needs to perform connection failure detection as agreed by a protocol. That is, the network device may determine whether the terminal performs connection failure detection in the target candidate cell based on the protocol agreement.

In an implementation, the specified type includes, but is not limited to, at least one of the following: Primary Cell (PCell); Primary Secondary Cell (PSCell); Special Cell (SpCell); Master Cell Group (MCG).

In an implementation, if the cell type of the target candidate cell belongs to any of the specified types, the network device may determine that the terminal performs connection failure detection in the target candidate cell.

In another implementation, if the cell type of the target candidate cell does not belong to any of the specified types, the network device may determine that the terminal does not perform connection failure detection in the target candidate cell.

In the above embodiment(s), the network device may determine whether the terminal performs connection failure detection in the target candidate cell based on the protocol agreement. It is ensured that the network device and the terminal have consistent understanding and high availability is provided.

In some embodiments, as shown in Fig. 9, Fig. 9 is a flow chart of a terminal behavior determination method according to an embodiment, which may be performed by a network device. The network device includes, but is not limited to, a 4G base station, a 5G base station, an MN, a SN, etc., and the method may include the following step 901.

In step 901, based on the network configuration indication information and whether the cell type of the target candidate cell belongs to the specified type, it is determined whether the terminal performs connection failure detection in the target candidate cell.

In an embodiment of the present disclosure, the target candidate cell is associated with the target candidate cell configuration. If the target candidate cell configuration includes a configuration for a candidate cell, then the candidate cell is the target candidate cell, and the target candidate cell is associated with the target candidate cell configuration.

In an embodiment of the present disclosure, the target candidate cell configuration is the candidate cell configuration that is activated or deactivated when the candidate cell configuration changes.

In an embodiment of the present disclosure, the network configuration indication information is configured to indicate whether the terminal needs to perform connection failure detection in the target candidate cell. The specified type is the type of cell or cell group that needs to perform connection failure detection as agreed by the protocol.

That is, the network device may jointly determine whether the terminal performs connection failure detection in the target candidate cell based on the network configuration indication information sent to the terminal and the protocol agreement.

In an implementation, the specified type includes, but is not limited to, at least one of the following: Primary Cell (PCell); Primary Secondary Cell (PSCell); Special Cell (SpCell); Master Cell Group (MCG).

In an implementation, when the cell type of the target candidate cell belongs to any of the specified types, and the network configuration indication information indicates that the terminal needs to perform connection failure detection in the target candidate cell, the network device may determine that the terminal performs connection failure detection in the target candidate cell.

In another implementation, the cell type of the target candidate cell does not belong to any of the specified types. Then, even if the network configuration indication information indicates that the terminal needs to perform connection failure detection in the target candidate cell, the network device may determine that the terminal does not perform connection failure detection in the target candidate cell.

In another implementation, even if the cell type of the target candidate cell belongs to any of the specified types, but the network configuration indication information indicates that the terminal does not need to perform connection failure detection in the target candidate cell, the network device may then determine that the terminal does not perform connection failure detection in the target candidate cell.

In another implementation, the cell type of the target candidate cell does not belong to any of the specified types, and the network configuration indication information indicates that the terminal does not need to perform connection failure detection in the target candidate cell. Then, the network device may determine that the terminal does not perform connection failure detection in the target candidate cell.

In the above embodiment(s), the network device may jointly determine whether the terminal performs connection failure detection in the target candidate cell based on the network configuration indication information sent to the terminal and the protocol agreement. It is ensured that the network device and the terminal have consistent understanding and high availability is provided.

In some embodiments, the network configuration indication information sent by the network device to the terminal may also include failure configuration information. The failure configuration information is information configured by the network device for the terminal to perform connection failure detection and/or connection failure recovery.

In an implementation, the failure configuration information includes, but is not limited to, at least one of the following: reference signal indication information, where the reference signal indication information is configured to indicate the specified reference signal for the terminal to perform connection failure detection; beam identifier, where the beam identifier is configured to indicate the available beam when the terminal performs connection failure recovery.

Specifically, the beam identifier includes at least one of the following: SSB identifier; CSI-RS identifier.

In the above embodiment(s), the network configuration indication information sent to the terminal by the network device may include the failure configuration information, so as to configure the terminal with information for performing connection failure detection and/or connection failure recovery. Thus, the terminal may subsequently perform connection failure detection and connection failure recovery in the target candidate cell, thereby improving the stability of the wireless connection and providing high availability.

The above method(s) provided by the present disclosure is further illustrated as follows.

Embodiment 1, the above methods for detection processing and terminal behavior determination may include the following steps 1, 2, and 3.

Step 1, the network device sends candidate cell configuration information to the terminal.

The candidate cell configuration information is configured by the network device to provide one or more candidate cell configurations for the terminal. In an example, the network device may send the candidate cell configuration information through an RRC reconfiguration (RRCReconfiguration) message.

Step 2, the terminal determines whether to perform connection failure detection in the target candidate cell according to the predefined rule and the candidate cell configuration information in response to the candidate cell configuration used by the terminal being changed.

The triggering condition for the change of the candidate cell configuration used by the terminal includes any one of the following Condition 1 and Condition 2.

Condition 1, the terminal receives the change indication information sent by the network device.

For example, the change indication information may change the candidate cell configuration corresponding to the PCell of the terminal from candidate cell configuration #1 to candidate cell configuration #2.

The change indication information may be a DCI, a MAC CE, or an RRC message.

Condition 2, the terminal meets the predefined candidate cell configuration change condition.

In an example, the measurement result for PCell by the terminal meets the A3 event, and the terminal changes the candidate cell configuration corresponding to the PCell from candidate cell configuration #1 to candidate cell configuration #2.

In an embodiment of the present disclosure, the behavior of the terminal changing the used candidate cell configuration includes, but is not limited to, at least one of the following: the candidate cell configuration corresponding to the target candidate cell is changed; the candidate cell configuration corresponding to the target candidate cell is deactivated.

In an embodiment of the present disclosure, the target candidate cell is associated with the target candidate cell configuration. If the target candidate cell configuration includes the configuration for a candidate cell, then the candidate cell is the target candidate cell, and the target candidate cell is associated with the target candidate cell configuration.

In an embodiment of the present disclosure, the target candidate cell configuration is the candidate cell configuration that is activated or deactivated when the candidate cell configuration changes.

In an embodiment of the present disclosure, the predefined rule includes any of the following first, second, and third predefined rule.

The first predefined rule is to determine whether to perform connection failure detection in the target candidate cell according to the network configuration indication information sent by the network device.

The network configuration indication information is configured to indicate whether the terminal needs to perform connection failure detection in the configured target candidate cell. Further, the way for sending the network configuration indication information may include any of the following:
including the network configuration indication information in the candidate cell configuration information;
including the network configuration indication information in the change indication information, where the change indication information is configured to instruct the terminal to change the used candidate cell configuration.

The second predefined rule is to determine whether the terminal needs to perform connection failure detection in the target candidate cell based on whether the cell type of the target candidate cell belongs to the specified type agreed by the protocol.

The specified type includes at least one of the following: Primary Cell (PCell); Primary Secondary Cell (PSCell); Special Cell (SpCell); Master Cell Group (MCG).

If the cell type of the target candidate cell belongs to the specified type agreed by the protocol, it is determined that the terminal performs connection failure detection in the target candidate cell. Otherwise, it is determined that the terminal does not perform connection failure detection in the target candidate cell.

The third predefined rule is to jointly determine whether to perform connection failure detection in the target candidate cell according to the network configuration indication information sent by the network device and the protocol agreement.

The specific implementation has been introduced in the above embodiment(s) and will not be repeated here.

The network configuration indication information includes failure configuration information. The failure configuration information is information configured by the network device for the terminal to perform connection failure detection and/or connection failure recovery.

For example, the failure configuration information is included in the MAC CE of the change indication information including the network configuration indication information.

In an implementation, the failure configuration information includes, but is not limited to, at least one of the following: reference signal indication information, where the reference signal indication information is configured to indicate the specified reference signal for the terminal to perform connection failure detection; beam identifier, where the beam identifier is configured to indicate the available beam when the terminal performs connection failure recovery.

Specifically, the beam identifier includes at least one of the following: SSB identifier; CSI-RS identifier.

Furthermore, the behavior of the terminal performing connection failure detection in the target candidate cell includes, but is not limited to, at least one of the following:
resetting the counter corresponding to the connection failure detection process, where the counter corresponding to the connection failure detection process includes, but is not limited to, the beam failure counter and the physical layer desynchronization counter;
resetting the timer corresponding to the connection failure detection process, where the timer corresponding to the connection failure detection process includes, but is not limited to, the beam failure detection timer and the physical layer desynchronization timer;
discarding the connection failure report information, such as discarding the beam failure report MAC CE, or discarding the Radio Link Failure report;
considering that the connection failure recovery process is successfully completed, where for example, for the beam failure recovery process, the terminal considers that the beam failure recovery process is successfully completed, for the beam failure recovery process in the SCell, it is considered that the beam failure report process is successfully completed, and for the beam failure recovery process in the SCell, it is considered that the random access process triggered by the beam failure is successfully completed;
in response that the connection failure recovery configuration has changed, stopping the ongoing connection failure recovery process and triggering a new connection failure recovery process, where for example, for the beam failure recovery process in the SpCell, if the beam failure recovery configuration of the SpCell is changed during the activation, deactivation or change of the candidate cell configuration corresponding to the SpCell, the terminal stops the ongoing beam failure recovery process (for example, the random access process triggered by beam failure recovery in the SpCell) and triggers a new beam failure recovery process (for example, the random access process that triggers beam failure recovery in the SpCell).

Step 3, after the terminal performs connection failure detection in the target candidate cell and detects connection failure, and in response to the target candidate cell configuration being activated again, the terminal is triggered to perform connection failure recovery, or in response to performing connection failure detection in the target candidate cell and detecting connection failure, the terminal is triggered to perform connection failure recovery in the cell where the candidate cell configuration is activated.

In an embodiment of the present disclosure, the triggering the terminal to perform connection failure recovery may include, but is not limited to, at least one of the following:
triggering the terminal to perform random access in the target candidate cell;
triggering the terminal to report connection failure information associated with the target candidate cell.

The connection failure information reported by the terminal includes, but is not limited to, at least one of the following:
candidate cell configuration identifier corresponding to connection failure;
candidate cell identifier corresponding to connection failure;
connection failure type;
cell state corresponding to connection failure;
cell configuration state corresponding to connection failure;
reference signal information corresponding to connection failure;
cell information used for connection failure recovery;
reference signal information used for connection failure recovery.

The candidate cell configuration identifier corresponding to connection failure refers to the identifier of the candidate cell configuration in which connection failure is detected, and the candidate cell identifier corresponding to connection failure refers to the identifier of the candidate cell in which connection failure is detected.

The connection failure type includes, but is not limited to, at least one of the following: beam failure; physical layer desynchronization.

The cell state corresponding to connection failure includes, but is not limited to, the activation state and the deactivation state.

The cell configuration state corresponding to connection failure includes, but is not limited to, the activation state and the deactivation state.

In an embodiment of the present disclosure, the network device will configure the cell state for different candidate cells, including the activation state or the deactivation state. The configured cell state is the candidate cell in the activation state, and the actual cell state may be the activation state or the deactivation state. The cell configuration state corresponding to connection failure refers to the cell state configured by the network device for the cell in which connection failure occurs. The cell state corresponding to connection failure refers to the actual state of the cell in which connection failure occurs.

The reference signal information corresponding to connection failure includes, but is not limited to, the beam information corresponding to beam failure.

The cell information used for connection failure recovery refers to the relevant information of the cell that can be used for connection failure recovery provided by the network device to the terminal.

The reference signal information used for connection failure recovery includes, but is not limited to, the relevant information of the available candidate beam detected by the terminal after beam failure occurs.

In the above embodiment(s), when the candidate cell configuration used by the terminal changes, the terminal may determine whether to perform connection failure detection in the target candidate cell according to the predefined rule, and then perform connection failure detection in the target candidate cell. When connection failure is detected, the terminal may be triggered to perform connection failure recovery, thereby improving the stability of the wireless connection, ensuring that the network device and the terminal have consistent understanding, and providing high availability.

Corresponding to the above-mentioned embodiment(s) of the detection processing method, the present disclosure also provides an embodiment of the detection processing apparatus.

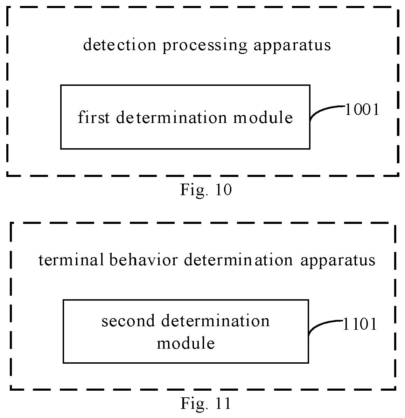

Referring to Fig. 10, Fig. 10 is a block diagram of a detection processing apparatus according to an example embodiment. The apparatus is applied to a terminal, and includes:
a first determination module 1001, configured to determine whether to perform connection failure detection in a target candidate cell according to a predefined rule in response to a candidate cell configuration used by the terminal being changed.

Referring to Fig. 11, Fig. 11 is a block diagram of a detection processing apparatus according to an example embodiment. The apparatus is applied to a network device, and includes:
a second determination module 1101, configured to determine whether the terminal performs connection failure detection in a target candidate cell.

For the apparatus embodiment(s), since it basically corresponds to the method embodiment(s), the relevant parts may refer to the partial description of the method embodiment(s). The apparatus embodiment(s) described above is only schematic. The above-mentioned unit described as a separate component may or may not be physically separated, and the component displayed as a unit may or may not be a physical unit. That is, it may be located at one place, or it may be distributed over multiple network units. The purpose of the disclosed scheme may be achieved by selecting some or all of the modules according to actual conditions. A person of ordinary skill in the art may understand and implement it without creative work.

Accordingly, the present disclosure also provides a computer-readable storage medium. The storage medium stores a computer program, and the computer program is used to execute any of the detection processing method(s) described above at the terminal side.

Accordingly, the present disclosure also provides a computer-readable storage medium. The storage medium stores a computer program, and the computer program is used to execute any of the terminal behavior determination method(s) described above at the network device side.

Accordingly, the present disclosure also provides a detection processing device, including:
a processor; and
a memory for storing instructions executable by the processor.

The processor is configured to execute any of the detection processing method(s) described above at the terminal side.

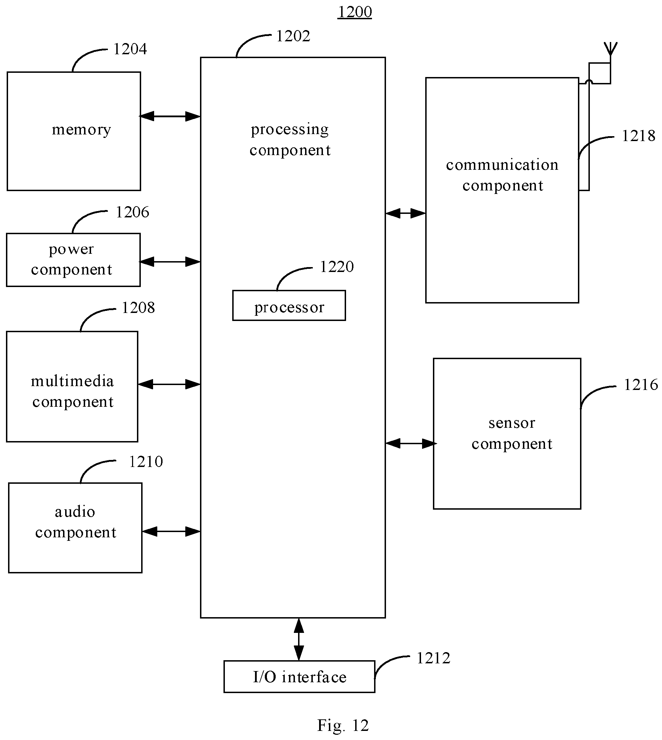

Fig. 12 is a block diagram of a detection processing device 1200 shown according to an example embodiment. For example, the device 1200 may be a terminal such as a mobile phone, a tablet computer, an e-book reader, a multimedia playback device, a wearable device, a vehicle-mounted user device, an iPad, a smart TV, etc.

With reference to Fig. 12, the device 1200 may include one or more of the following components: a processing component 1202, a memory 1204, a power component 1206, a multimedia component 1208, an audio component 1210, an input/output (I/O) interface 1212, a sensor component 1216, and a communication component 1218.

The processing component 1202 generally controls the overall operation of the device 1200, such as operations associated with display, phone calls, random access to data, camera operations, and recording operations. The processing component 1202 may include one or more processors 1220 to execute instructions, so as to complete all or some of the steps of the above-mentioned detection processing method. In addition, the processing component 1202 may include one or more modules to facilitate interactions between the processing component 1202 and other components. For example, the processing component 1202 may include a multimedia module to facilitate interactions between the multimedia component 1208 and the processing component 1202. For another example, the processing component 1202 may read executable instructions from the memory to implement the steps of the detection processing method provided in the above-mentioned embodiments.

The memory 1204 is configured to store various types of data to support operations on the device 1200. Examples of such data include instructions for any application or method operating on the device 1200, contact data, phone book data, messages, pictures, videos, etc. The memory 1204 may be implemented by any type of volatile or non-volatile storage device or a combination thereof, such as Static Random Access Memory (SRAM), Electrically Erasable Programmable Read-Only Memory (EEPROM), Erasable Programmable Read-Only Memory (EPROM), Programmable Read-Only Memory (PROM), Read-Only Memory (ROM), magnetic memory, flash memory, magnetic disk, or optical disk.

The power component 1206 provides power to various components of the device 1200. The power component 1206 may include a power management system, one or more power supplies, and other components associated with generating, managing and distributing power for the device 1200.

The multimedia component 1208 includes a display screen that provides an output interface between the device 1200 and a user. In some embodiments, the multimedia component 1208 includes a front camera and/or a rear camera. When the device 1200 is in an operation mode, such as a shooting mode or a video mode, the front camera and/or the rear camera may receive external multimedia data. Each of the front camera and the rear camera may be a fixed optical lens system or have a focal length and optical zoom capability.

The audio component 1210 is configured to output and/or input audio signals. For example, the audio component 1210 includes a microphone (MIC). When the device 1200 is in an operation mode, such as a call mode, a recording mode, and a voice recognition mode, the microphone is configured to receive an external audio signal. The received audio signal may be further stored in the memory 1204 or sent via the communication component 1218. In some embodiments, the audio component 1210 also includes a speaker for outputting audio signals.

The I/O interface 1212 provides an interface between the processing component 1202 and the peripheral interface module, which may be a keyboard, a click wheel, a button, etc. These buttons may include, but are not limited to, a home button, a volume button, a start button, and a lock button.

The sensor component 1216 includes one or more sensors for providing various aspects of status assessment for the device 1200. For example, the sensor component 1216 may detect the on/off state of the device 1200, the relative positioning among components, such as display and keypad of the device 1200. The sensor component 1216 may also detect the position change of the device 1200 or a component of the device 1200, the presence or absence of user contact with the device 1200, the orientation or acceleration/deceleration of the device 1200, and the temperature change of the device 1200. The sensor component 1216 may include a proximity sensor configured to detect the presence of nearby objects without any physical contact. The sensor component 1216 may also include a light sensor, such as a CMOS or CCD image sensor, for use in imaging applications. In some embodiments, the sensor component 1216 may also include an acceleration sensor, a gyroscope sensor, a magnetic sensor, a pressure sensor, or a temperature sensor.

The communication component 1218 is configured to facilitate wired or wireless communication between the device 1200 and other devices. The device 1200 may access a wireless network based on a communication standard, such as Wi-Fi, 2G, 3G, 4G, 5G, or 6G, or a combination thereof. In an example embodiment, the communication component 1218 receives a broadcast signal or broadcast-related information from an external broadcast management system via a broadcast channel. In an example embodiment, the communication component 1218 also includes a Near Field Communication (NFC) module to facilitate short-range communication. For example, the NFC module may be implemented based on Radio Frequency identification (RFID) technology, Infrared Data Association (IrDA) technology, Wltra-WideBand (UWB) technology, Bluetooth (BT) technology, and other technologies.

In an example embodiment, the device 1200 may be implemented by one or more Application-Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, microcontrollers, microprocessors, or other electronic components, so as to perform any of the detection processing methods described above at the terminal side.

In an example embodiment, a non-transitory machine-readable storage medium including instructions is also provided, such as a memory 1204 including instructions. The above instructions may be executed by the processor 1220 of the device 1200 to complete the above detection processing method. For example, the non-transitory computer-readable storage medium may be a ROM, a Random Access Memory (RAM), a CD-ROM, a magnetic tape, a floppy disk, an optical data storage device, and the like.

Accordingly, the present disclosure also provides a terminal behavior determination device, comprising:
a processor; and
a memory for storing instructions executable by the processor.

The processor is configured to execute any of the terminal behavior determination methods described above at the network device side.

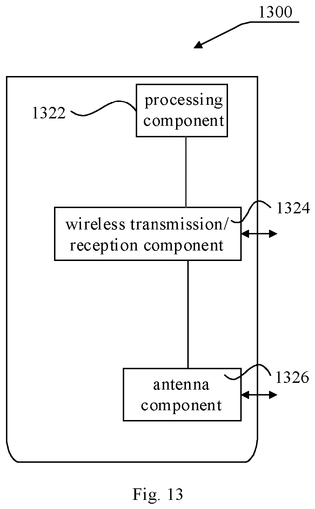

As shown in Fig. 13, Fig. 13 is a schematic structural diagram of a terminal behavior determination device 1300 according to an example embodiment. The device 1300 may be provided as a network device. Referring to Fig. 13, the device 1300 includes a processing component 1322, a wireless transmission/reception component 1324, an antenna component 1326, and a signal processing part specific to a wireless interface, where the processing component 1322 may further include at least one processor.

One of the processors in the processing component 1322 may be configured to execute any of the terminal behavior determination methods described above.

Those skilled in the art will easily think of other embodiments of the present disclosure after considering the specification and practicing the content disclosed herein. The present disclosure is intended to cover any variation, use or adaptive change of the present disclosure, which follows the general principles of the present disclosure and includes common knowledge or conventional technical means in the technical field not disclosed in the present disclosure. The description and examples are to be regarded as instances only, and the true scope and spirit of the present disclosure are indicated by the following claims.

It should be understood that the present disclosure is not limited to the precise structures that have been described above and shown in the drawings, and various modifications and changes may be made without departing from the scope thereof. The scope of the present disclosure is limited only by the appended claims.

## Claims

1. A detection processing method, performed by a terminal, and comprising:
in response to a candidate cell configuration used by the terminal being changed, determining whether to perform connection failure detection in a target candidate cell according to a predefined rule.

2. The method according to claim 1, wherein
the target candidate cell is associated with a target candidate cell configuration, and
the target candidate cell configuration is the candidate cell configuration that is activated or deactivated when the candidate cell configuration changes.

3. The method according to claim 1, wherein the determining whether to perform connection failure detection in the target candidate cell according to the predefined rule comprises at least one of:
determining whether to perform connection failure detection in the target candidate cell according to network configuration indication information sent by a network device, wherein the network configuration indication information is configured to indicate whether the terminal needs to perform connection failure detection in the target candidate cell;
determining whether to perform connection failure detection in the target candidate cell based on whether a cell type of the target candidate cell belongs to a specified type, wherein the specified type is a type of cell or cell group that needs to perform connection failure detection as agreed by a protocol;
determining whether to perform connection failure detection in the target candidate cell based on the network configuration indication information and whether the cell type of the target candidate cell belongs to the specified type.

4. The method according to claim 3, wherein the determining whether to perform connection failure detection in the target candidate cell based on the network configuration indication information and whether the cell type of the target candidate cell belongs to the specified type comprises:
in a case that the cell type of the target candidate cell belongs to the specified type and the network configuration indication information indicates that the terminal needs to perform connection failure detection in the target candidate cell, determining to perform connection failure detection in the target candidate cell; and
in a case that at least one of: the cell type of the target candidate cell does not belong to the specified type or the network configuration indication information indicates that the terminal does not need to perform connection failure detection in the target candidate cell, determining not to perform connection failure detection in the target candidate cell.

5. The method according to claim 3 or 4, wherein
the network configuration indication information is comprised in candidate cell configuration information, wherein the candidate cell configuration information is configured by the network device to provide one or more candidate cell configurations for the terminal; or
the network configuration indication information is comprised in change indication information, wherein the change indication information is configured to instruct the terminal to change the used candidate cell configuration.

6. The method according to claim 3 or 4, wherein the specified type comprises at least one of:
Primary Cell (PCell);
Primary Secondary Cell (PSCell);
Special Cell (SpCell);
Master Cell Group (MCG).

7. The method according to claim 3 or 4, wherein
the network configuration indication information comprises failure configuration information, wherein the failure configuration information is information configured by the network device for the terminal to perform at least one of: connection failure detection or connection failure recovery.

8. The method according to claim 7, wherein the failure configuration information comprises at least one of:
reference signal indication information, wherein the reference signal indication information is configured to indicate a specified reference signal for the terminal to perform connection failure detection;
beam identifier, wherein the beam identifier is configured to indicate an available beam when the terminal performs connection failure recovery.

9. The method according to claim 8, wherein the beam identifier comprises at least one of:
Synchronization Signal Block (SSB) identifier;
Channel State Information-Reference Signal (CSI-RS) identifier.

10. The method according to claim 1, wherein the method further comprises at least one of:
in response to receiving change indication information sent by a network device, triggering the terminal to change the used candidate cell configuration, wherein the change indication message is configured to instruct the terminal to change the used candidate cell configuration;
in response to meeting a predefined candidate cell configuration change condition, triggering the terminal to change the used candidate cell configuration.

11. The method according to claim 2, wherein the method further comprises:
in response that it is determined to perform connection failure detection in the target candidate cell according to the predefined rule, and the target candidate cell configuration is deactivated, performing connection failure detection in the target candidate cell; or
in response that it is determined to perform connection failure detection in the target candidate cell according to the predefined rule, and the target candidate cell configuration is activated, performing connection failure detection in the target candidate cell.

12. The method according to claim 11, wherein the performing connection failure detection in the target candidate cell comprises at least one of:
resetting a counter corresponding to a connection failure detection process;
resetting a timer corresponding to the connection failure detection process;
discarding connection failure report information;
considering that connection failure recovery process is successfully completed;
in response that a connection failure recovery configuration is changed, stopping an ongoing connection failure recovery process and triggering a new connection failure recovery process.

13. The method according to claim 11, wherein the method further comprises;
triggering the terminal to perform connection failure recovery.

14. The method according to claim 13, wherein the triggering the terminal to perform connection failure recovery comprises:
after the target candidate cell performs connection failure detection and detects connection failure, and in response to the target candidate cell configuration being activated again, triggering the terminal to perform connection failure recovery; or
in response to the target candidate cell performing connection failure detection and detecting connection failure, triggering the terminal to perform connection failure recovery in a cell where the candidate cell configuration is activated.

15. The method according to claim 14, wherein the triggering the terminal to perform connection failure recovery comprises at least one of:
triggering the terminal to perform random access in the target candidate cell;
triggering the terminal to report connection failure information associated with the target candidate cell.

16. The method according to claim 15, wherein the connection failure information comprises at least one of:
candidate cell configuration identifier corresponding to connection failure;
candidate cell identifier corresponding to connection failure;
connection failure type;
cell state corresponding to connection failure;
cell configuration state corresponding to connection failure;
reference signal information corresponding to connection failure;
cell information used for connection failure recovery;
reference signal information used for connection failure recovery.

17. A terminal behavior determination method, performed by a network device, and comprising:
determining whether the terminal performs connection failure detection in a target candidate cell according to a predefined rule.

18. The method according to claim 17, wherein
the target candidate cell is associated with a target candidate cell configuration, and
the target candidate cell configuration is the candidate cell configuration that is activated or deactivated when the candidate cell configuration used by the terminal changes.

19. The method according to claim 17, wherein the determining whether the terminal performs connection failure detection in the target candidate cell according to the predefined rule comprises:
determining whether the terminal performs connection failure detection in the target candidate cell based on network configuration indication information sent by the network device to the terminal, wherein the network configuration indication information is configured to indicate whether the terminal needs to perform connection failure detection in the target candidate cell;
determining whether the terminal performs connection failure detection in the target candidate cell based on whether a cell type of the target candidate cell belongs to a specified type, wherein the specified type is a type of cell or cell group that needs to perform connection failure detection as agreed by a protocol;
determining whether the terminal performs connection failure detection in the target candidate cell based on the network configuration indication information and whether the cell type of the target candidate cell belongs to the specified type.

20. The method according to claim 19, wherein the determining whether the terminal performs connection failure detection in the target candidate cell based on the network configuration indication information and whether the cell type of the target candidate cell belongs to the specified type comprises:
in a case that the cell type of the target candidate cell belongs to the specified type and the network configuration indication information indicates that the terminal needs to perform connection failure detection in the target candidate cell, determining that the terminal performs connection failure detection in the target candidate cell; and
in a case that at least one of: the cell type of the target candidate cell does not belong to the specified type or the network configuration indication information indicates that the terminal does not need to perform connection failure detection in the target candidate cell, determining that the terminal does not perform connection failure detection in the target candidate cell.

21. The method according to claim 19 or 20, wherein the method further comprises:
sending candidate cell configuration information comprising the network configuration indication information to the terminal, wherein the candidate cell configuration information is configured by the network device to provide one or more candidate cell configurations for the terminal; or
sending change indication information comprising the network configuration indication information to the terminal, wherein the change indication information is configured to instruct the terminal to change the used candidate cell configuration.

22. The method according to claim 19 or 20, wherein the specified type comprises at least one of:
Primary Cell (PCell);
Primary Secondary Cell (PSCell);
Special Cell (SpCell);
Master Cell Group (MCG).

23. The method according to claim 19 or 20, wherein
the network configuration indication information comprises failure configuration information, wherein the failure configuration information is information used to configure the terminal to perform at least one of connection failure detection or connection failure recovery.

24. The method according to claim 23, wherein the failure configuration information comprises at least one of:
reference signal indication information, wherein the reference signal indication information is used to indicate a specified reference signal for the terminal to perform connection failure detection;
beam identifier, wherein the beam identifier is used to indicate an available beam when the terminal performs connection failure recovery.

25. The method according to claim 24, wherein the beam identifier comprises at least one of:
Synchronization Signal Block (SSB) identifier;
Channel State Information-Reference Signal (CSI-RS) identifier.

26. A detection processing apparatus, applied to a terminal, and comprising:
a first determination module, configured to determine whether to perform connection failure detection in a target candidate cell according to a predefined rule in response to a candidate cell configuration used by the terminal being changed.

27. A terminal behavior determination apparatus, applied to a network device, and comprising:
a second determination module, configured to determine whether the terminal performs connection failure detection in a target candidate cell.

28. A detection processing device, comprising:
a processor; and
a memory for storing instructions executable by the processor,
wherein the processor is configured to perform the detection processing method according to any one of claims 1-16.

29. A terminal behavior determination device, comprising:
a processor; and
a memory for storing instructions executable by the processor,
wherein the processor is configured to perform the terminal behavior determination method according to any one of claims 17-25.
